# EUROPÄISCHE PATENTSCHRIFT

(11) **EP 3 039 395 B1**
(45) Veröffentlichungstag und Bekanntmachung des Hinweises auf die Patenterteilung: **18.12.2019**
(21) Anmeldenummer: 14753063.8
(22) Anmeldetag: 18.08.2014
(51) Int. Cl.: G01M 3/20, G01N 1/22, G01N 1/24

(54) **SELBSTREINIGENDER PARTIKELFILTER IN EINER SCHNÜFFELSONDE**
SELF-CLEANING PARTICLE FILTER IN A SNIFFER PROBE
FILTRE À PARTICULES AUTONETTOYANT DANS UNE SONDE DE RENIFLAGE

(30) Priorität: 29.08.2013 DE 102013217279
(43) Veröffentlichungstag der Anmeldung: 06.07.2016
(73) Patentinhaber: Inficon GmbH, 50968 Köln (DE)
(72) Erfinder: WETZIG, Daniel, 50999 Köln (DE)
(74) Vertreter: dompatent von Kreisler Selting Werner - Partnerschaft von Patent- und Rechtsanwälten mbB
(86) Internationale Anmeldenummer: PCT/EP2014/067584
(87) Internationale Veröffentlichungsnummer: WO 2015/028336

(56) Entgegenhaltungen:
- WO-A1-2009/033978
- DE-A1-102009 004 363
- DE-B- 1 246 278
- US-A- 5 728 929
- US-A1- 2011 290 006

## Beschreibung

Die Erfindung betrifft eine Schnüffelsonde für die Gaslecksuche.

Schnüffelsonden kommen bei der Gaslecksuche zum Einsatz, um mit einem Gas gefüllte Prüflinge auf ein mögliches Gasleck hin zu prüfen. Dabei wird die Schnüffelsonde an der Außenseite des Prüflings entlang geführt und saugt (schnüffelt) dabei Gas von der Außenseite des Prüflings. Im Falle eines Lecks wird das durch das Leck aus dem Prüfling austretende Gas ebenfalls mit aufgenommen und in einem nachfolgenden Gasdetektor analysiert. Der Gasdetektor ist typischerweise dazu ausgebildet, verschiedene Gasarten und insbesondere das aus dem Prüfling austretende Gas zu detektieren.

Es ist bekannt, Schnüffelsonden mit einer Sauggasleitung und mit einer von der Sauggasleitung abzweigenden Messgasleitung zu versehen. Während die Sauggasleitung von einem Sauggaseinlass zu einem mit einer Saugvorrichtung verbundenen Sauggasauslass führt, zweigt die Messgasleitung von der Sauggasleitung ab und weist an ihrem der Abzweigung gegenüberliegenden Ende einen Messgasauslass auf, der mit dem Gasdetektor verbindbar ist. Eine derartige Schnüffelsonde ist beispielsweise in WO 2009/033978 A beschrieben. Während die Saugvorrichtung zum Beispiel in Form einer starken Vakuumpumpe oder eines Lüfters eine vergleichsweise große Massenstromstärke in der Sauggasleitung erzeugt, wird mit Hilfe der Messgasleitung aus dieser Massenstromstärke ein Teilstrom entnommen und dem Gasdetektor zugeführt. Mit dieser Schnüffelsonde ist es möglich, Gaslecks auch in großen Entfernungen unter Verwendung einer großen angesaugten Massenstromstärke zu detektieren, indem dem Gasdetektor nur der erforderliche Teilstrom der angesaugten Massenstromstärke zugeführt wird.

Bei der Lecksuche werden in den gasführenden Leitungen Partikelfilter eingesetzt, um das Gasfördersystem und die Sensorik vor Verschmutzung und Verstopfung zu schützen. Um einen ausreichenden Schutz zu gewährleisten, müssen herkömmlicherweise mehrere Filterstufen nacheinander eingesetzt werden, um den Gesamtstrom der eingesogenen Luft zu filtern. Eine Schwierigkeit besteht dabei grundsätzlich darin, dass mit steigender Gasmenge des angesaugten Gasstroms auch der Verschmutzungsgrad zunimmt, so dass sich die Filter umso schneller zusetzen, je größer der Gasstrom ist. Die herkömmliche Art der Gasfilterung stellt somit einem limitierenden Faktor bei der Erhöhung des angesaugten Gasvolumenstroms dar.

US 5,728,929 beschreibt eine Anordnung mit einem Trägergasstrom und einer für Helium durchlässigen semipermeablen Membran, durch die Helium in den Trägergasstrom eindringen kann.

US 2011/0290006 A1 beschreibt eine mit einer für das Prüfgas durchlässigen Membran versehene Messsonde eines Leckdetektors zum Vorschieben in eine Gasleitung.

DE 10 2009 004 363 A1 beschreibt einen Drucksensor, der über eine Membran 22 an ein Saugrohr angeschlossen ist.

Der Erfindung liegt die Aufgabe zugrunde, eine Schnüffelsonde bereitzustellen, die einen großen Gasvolumenstrom ansaugen kann und einen verbesserten Gaspartikelfilter aufweist.

Die erfindungsgemäße Schnüffelsonde ist definiert durch die Merkmale von Patentanspruch 1.

Der die Abzweigung der Messgasleitung von der Sauggasleitung bildende Messgaseinlass weist einen derart angeordneten Messgasfilter auf, dass der durch die Sauggasleitung in Richtung des Sauggasauslasses geführte Sauggasstrom an der Oberfläche des Messgasfilters entlang geführt wird. Der Messgasfilter wird also nicht von dem insgesamt von der Schnüffelsonde angesaugten Sauggasstrom durchströmt, sondern lediglich von dem durch die Messgasleitung zum Gasdetektor hin geführten Teilstrom. Dabei wird der Sauggasstrom an der Oberfläche des Messgasfilters entlang geführt und der Sauggasstrom führt von dem Messgasfilter ausgefilterte Partikel ab. Der Sauggasstrom reinigt und regeneriert also den Messgasfilter, ohne dass der Messgasfilter entnommen werden muss und der Betrieb der Schnüffelsonde unterbrochen werden muss. Der Messgasfilter setzt sich nicht so schnell zu wie bei der herkömmlichen Filterung des insgesamt angesaugten Gasstroms. Die Intervalle zwischen dem Austausch des Gasfilters können dadurch erheblich verlängert werden.

Der Messgasfilter bildet vorteilhafterweise im Bereich der Abzweigung die Innenwand der Sauggasleitung, um besonders günstige Strömungsverhältnisse zu erzielen. Dabei kann der Messgasfilter zylindrisch über den gesamten Umfang der Innenwand ausgebildet sein. Es ist denkbar, radial außerhalb des Messgasfilters einen ringförmigen Spalt vorzusehen, der mit der Messgasleitung verbunden ist. Eine derartige Anordnung ist insbesondere bei einer tellerförmigen "Carpet-Probe" von Vorteil. Auch bei einer derartigen Schnüffelsonde wird der Großteil des angesaugten Luftstroms direkt und ungefiltert wieder abgeblasen und nur ein Teilstrom abgezweigt und dem Gasdetektor zugeführt.

Während der Sauggasstrom die Sauggasleitung in Axialrichtung durchströmt, ist es vorteilhaft, wenn der Messgasfilter zumindest zu einem Teil radial von innen nach außen von dem Messgasstrom durchströmt wird, um von dem Messgasfilter aufgefangene Partikel von der Sauggasströmung abzutragen.

Vorteilhafterweise beträgt die Massenstromstärke des Sauggasstroms in Strömungsrichtung vor der Abzweigung der Messgasleitung zwischen 2.000 sccm und 4.000 sccm und besonders vorzugsweise etwa 3.000 sccm. Vorzugsweise beträgt die Volumenströmung des Messgasstroms zwischen 200 sccm und 400 sccm und weiter vorzugsweise etwa 300 sccm. Mit "etwa" ist dabei eine Abweichung von maximal circa ± 10 % gemeint. Somit kann der Anteil des Messgasstroms an dem angesaugten Sauggasstrom etwa 10 % betragen. Vorzugsweise liegt dieser Anteil im Bereich zwischen dem 0,5-fachen bis 0,01-fachen der angesaugten Sauggas-Massenstromstärke.

Der Gaseinlass kann mit einem Einlassfilter versehen sein, dessen Porengröße ausreichend grob ausgebildet ist, um die angesaugte Massenstromstärke nicht nennenswert zu beeinträchtigen und ein schnelles Zusetzen des Filters zu vermeiden. Im Bereich hinter der Abzweigung der Messgasleitung kann die Sauggasleitung in Strömungsrichtung einen Sauggasfilter aufweisen, der einen großen Gasfluss ermöglicht und nicht nennenswert beeinträchtigt. An diesen Filter kann eine beispielsweise zu einer Pumpe geführte kapillare oder schlauchartige Zuführung des Sauggasstroms angeschlossen sein.

Im Folgenden werden anhand der Figuren zwei Ausführungsbeispiele der Erfindung näher erläutert. Es zeigen:
- Fig. 1: das erste Ausführungsbeispiel und
- Fig. 2: das zweite Ausführungsbeispiel.

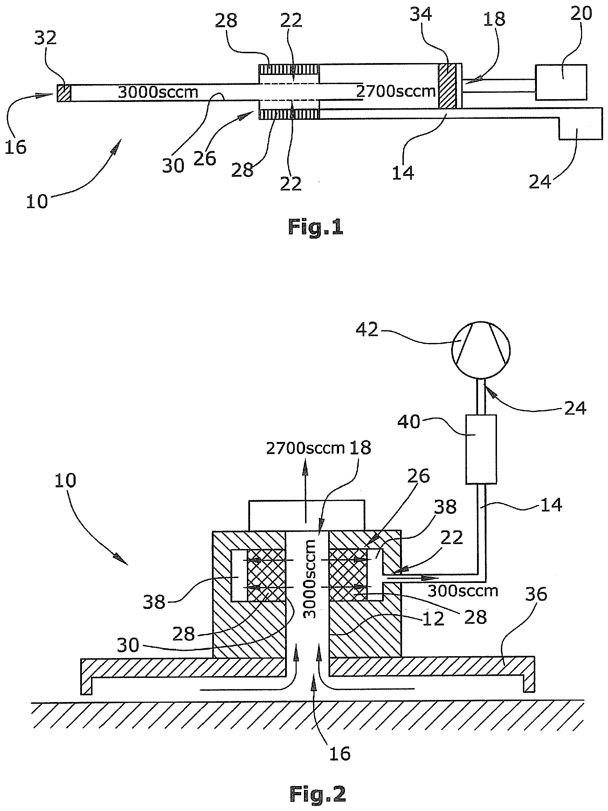

Im Folgenden werden zunächst die Gemeinsamkeiten der beiden Ausführungsbeispiele geschildert:
Die Schnüffelsonde 10 weist eine Sauggasleitung 12 und eine von der Sauggasleitung 12 abzweigende Messgasleitung 14 auf. Die Sauggasleitung 12 ist an ihrem einen Ende mit einem Sauggaseinlass 16 zum Ansaugen des Gases versehen. An ihrem dem Sauggaseinlass gegenüberliegenden Ende ist die Sauggasleitung 12 mit einem Sauggasauslass 18 versehen, der zum Anschluss einer Saugvorrichtung 20 dient. In dem Ausführungsbeispiel nach Figur 1 ist die Saugvorrichtung 20 eine Vakuumpumpe. In dem Ausführungsbeispiel nach Figur 2 kann es sich bei der Saugvorrichtung 20, die der Einfachheit halber nicht in der Figur dargestellt ist, um einen Lüfter (Fan) oder um eine Pumpe handeln.

Die Messgasleitung 14 zweigt von der Sauggasleitung 12 ab. Die Messgasleitung 14 ist an deren mit der Sauggasleitung 12 verbundenen Ende mit einem Messgaseinlass 22 und an deren dem Messgaseinlass 22 gegenüberliegenden Ende mit einem Messgasauslass 24 versehen. Der Messgasauslass 24 dient zum Anschluss eines Messgasdetektors. Bei dem Messgasdetektor, der in den Figuren zur Vereinfachung jeweils nicht dargestellt ist, kann es sich jeweils um ein Massenspektrometer oder anderes selektives Gasnachweissystem handeln.

Der Messgaseinlass 22 bildet die Abzweigung 26 der Messgasleitung 14 von der Sauggasleitung 12. Der Messgaseinlass 22 ist dabei mit einem Messgasfilter 28 versehen. Der Messgasfilter 28 ist jeweils rohrförmig ausgebildet, wobei die Innenseite des Messgasfilters 28 die Innenwand 30 der Sauggasleitung 12 im Bereich der Abzweigung 26 bildet.

Die Saugvorrichtung 20 saugt durch den Sauggaseinlass 16 einen Sauggasstrom von etwa 3.000 sccm an. Der Sauggasstrom wird entlang der Innenseite des Messgasfilters 28 in Axialrichtung der Sauggasleitung 12 zu deren Sauggasauslass 18 geführt und von dort der Saugvorrichtung 20 zugeführt. Im Bereich der Abzweigung 26 zweigt von dem Sauggasstrom ein Teilstrom ab, der durch den Messgaseinlass 22 und durch den Messgasfilter 28 hindurch in die Messgasleitung 14 einströmt. Dieser Teilstrom ist der Messgasstrom, der durch die Messgasleitung 14 und den Messgasauslass 24 hindurch dem in den Figuren nicht dargestellten Gasdetektor zugeführt wird. In dem Messgasstrom vorhandene Gasanteile werden von dem Gasdetektor detektiert. Der Messgasfilter 28 verhindert ein Eindringen von störenden Partikeln oder Verunreinigungen in die Messgasleitung 14. Die von dem Messgasfilter 28 aufgefangenen Partikel werden von der vergleichsweise starken Sauggasströmung abgetragen und in Richtung des Sauggasauslasses 18 transportiert.

Im Folgenden werden die Unterschiede zwischen den beiden Ausführungsbeispielen erläutert:
In Figur 1 handelt es sich um einen Schnüffellecksucher mit einer handgeführten Schnüffelspitze. Der Sauggaseinlass 16 ist mit einem Eingangsfilter 32 und der Sauggasauslass mit einem Ausgangsfilter 34 versehen. Die beiden Filter 32, 34 sind grobporige Filter, um lediglich grobe Partikel aufzufangen, während der Messgasfilter 28 ein feinporiger Filter ist. Die Filter 32, 34 beeinträchtigen die Sauggasströmung nur vernachlässigbar.

In Figur 2 handelt es sich bei der Schnüffelsonde 10 um eine sogenannte "Carpet-Probe", die einen großflächigen Saugteller 36 aufweist, in dessen Zentrum die Sauggasleitung 12 abzweigt und ihren Sauggaseinlass 16 aufweist. Radial außerhalb des Messgasfilters 28 ist ein ringförmiger Spalt 38 ausgebildet. Der von dem Saugasstrom abgezweigte Messgasstrom strömt radial von innen nach außen durch den Messgasfilter 28 hindurch und wird anschließend in Umfangsrichtung durch den ringförmigen Spalt der Messgasleitung 14 zugeführt, die mit dem Spalt 38 gasleitend verbunden ist. Die Messgasleitung 14 weist eine Flussdrossel 40 zur Strömungsbegrenzung auf und ist mit einer Vakuumpumpe 42 verbunden, die einen Teil des Gasdetektors bildet.

## Patentansprüche

1. Schnüffelsonde (10) für die Gaslecksuche, mit einer Sauggasleitung (12), die an deren einem Ende einen Sauggaseinlass (16) und an deren gegenüberliegendem Ende einen mit einer Saugvorrichtung (20) verbindbaren Sauggasauslass (18) aufweist, und mit einer von der Sauggasleitung (12) abzweigenden Messgasleitung (14), die an deren einem Ende einen die Abzweigung (26) bildenden Messgaseinlass (22) und an deren gegenüberliegendem Ende einen mit einem Gasdetektor verbindbaren Messgasauslass (24) aufweist,
**dadurch gekennzeichnet, dass**
der Messgaseinlass (22) einen derart angeordneten Messgas-Partikelfilter (28) aufweist, dass der durch die Sauggasleitung (12) zum Sauggasauslass (18) geführte Sauggasstrom an der Oberfläche des Messgas-Partikelfilters (28) entlang geführt ist.

2. Schnüffelsonde (10) nach Anspruch 1, **dadurch gekennzeichnet, dass** der Messgas-Partikelfilter (28) im Bereich der Abzweigung (26) die Rohrinnenwand der Sauggasleitung (12) bildet.

3. Schnüffelsonde (10) nach einem der vorhergehenden Ansprüche, **dadurch gekennzeichnet, dass** der Messgas-Partikelfilter (28) zylindrisch ist.

4. Schnüffelsonde (10) nach Anspruch 3, **dadurch gekennzeichnet, dass** radial außerhalb des Messgas-Partikelfilters (28) ein ringförmiger Spalt (38) ausgebildet ist.

5. Schnüffelsonde (10) nach einem der vorhergehenden Ansprüche, **dadurch gekennzeichnet, dass** der Sauggasstrom in Axialrichtung durch die Sauggasleitung (12) hindurch geführt ist und der Messgas-Partikelfilter (28) zumindest zu einem Teil radial von innen nach außen durchströmt wird.

6. Schnüffelsonde (10) nach einem der vorhergehenden Ansprüche, **dadurch gekennzeichnet, dass** der Sauggasstrom in Strömungsrichtung vor der Abzweigung (26) zwischen circa 2.000 sccm und 4.000 sccm und vorzugsweise etwa 3.000 sccm beträgt.

7. Schnüffelsonde (10) nach einem der vorhergehenden Ansprüche, **dadurch gekennzeichnet, dass** der Messgasstrom im Bereich zwischen circa 200 sccm bis 400 sccm und vorzugsweise etwa 300 sccm beträgt.

8. Schnüffelsonde (10) nach einem der vorhergehenden Ansprüche, **dadurch gekennzeichnet, dass** die Volumengeschwindigkeit des Messgasstroms im Bereich zwischen dem 0,01-fachen bis 0,5-fachen und vorzugsweise etwa das 0,1-fache des Sauggasstroms beträgt.

9. Schnüffelsonde (10) nach einem der vorhergehenden Ansprüche, **dadurch gekennzeichnet, dass** der Messgas-Partikelfilter (28) feinporig mit einer Porengröße von maximal 1 µm ausgebildet ist.

10. Schnüffelsonde (10) nach einem der vorhergehenden Ansprüche, **dadurch gekennzeichnet, dass** der Sauggaseinlass (16) einen Eingangsfilter (32) aufweist.

11. Schnüffelsonde (10) nach Anspruch 10, **dadurch gekennzeichnet, dass** der Eingangsfilter (32) eine Porengröße von circa 10 µm aufweist.

12. Schnüffelsonde (10) nach einem der vorhergehenden Ansprüche, **dadurch gekennzeichnet, dass** die Sauggasleitung (12) in Strömungsrichtung hinter der Abzweigung (26) einen Ausgangsfilter (34) aufweist.

13. Schnüffelsonde (10) nach Anspruch 12, **dadurch gekennzeichnet, dass** die Porengröße des Ausgangsfilters (34) circa 10 µm beträgt.

## Claims

1. A sniffer probe (10) for detecting gas leaks, comprising a suction gas line (12) which at its one end has a suction gas inlet (16) and at its opposite end has a suction gas outlet (18) connectable to a suction device (20), and further comprising a measurement gas line (14) branching from the suction gas line (12), which measurement gas line at its one end has a measurement gas inlet (22) forming the branch (26) and at its opposite end has a measurement gas outlet (24) connectable to a gas detector,
**characterized in that**
the measurement gas inlet (22) has a measurement gas particle filter (28) arranged such that the suction gas flow guided through the suction gas line (12) to the suction gas outlet (18) is guided along the surface of the measurement gas particle filter (28).

2. The sniffer probe (10) of claim 1, **characterized in that** the measurement gas particle filter (28) forms the tube inner wall of the suction gas line (12) in the region of the branch (26).

3. The sniffer probe (10) of one of the preceding claims, **characterized in that** the measurement gas particle filter (28) is cylindrical.

4. The sniffer probe (10) of claim 3, **characterized in that** an annular gap (38) is formed radially outside the measurement gas particle filter (28).

5. The sniffer probe (10) of one of the preceding claims, **characterized in that** the suction gas flow is directed in the axial direction through the suction gas line (12) and the measurement gas particle filter (28) is, at least in part, flown through radially from the inside out.

6. The sniffer probe (10) of one of the preceding claims, **characterized in that** the suction gas flow in the flow direction upstream of the branch (26) is between about 2,000 sccm and 4,000 sccm and, particularly preferred, about 3,000 sccm.

7. The sniffer probe (10) of one of the preceding claims, **characterized in that** the volume flow of the measurement gas flow is between about 200 sccm and 400 sccm and preferably about 300 sccm.

8. The sniffer probe (10) of one of the preceding claims, **characterized in that** the volume velocity of the measurement gas flow is in a range from 0.01 to 0.5 times and preferably about 0.1 times the suction gas flow.

9. The sniffer probe (10) of one of the preceding claims, **characterized in that** the measurement gas particle filter (28) is fine-pored, having a pore size of 1 µm at most.

10. The sniffer probe (10) of one of the preceding claims, **characterized in that** the suction gas inlet (16) has an inlet filter (32).

11. The sniffer probe (10) of claim 10, **characterized in that** the inlet filter (32) has a pore size of about 10 µm.

12. The sniffer probe (10) of one of the preceding claims, **characterized in that** the suction gas line (12) has an outlet filter (34) downstream of the branch (26), seen in the flow direction.

13. The sniffer probe (10) of claim 12, **characterized in that** the pore size of the outlet filter (34) is about 10 µm.

## Revendications

1. Sonde renifleuse (10) destinée à la recherche de fuite de gaz, la sonde renifleuse comprenant un conduit de gaz aspiré (12), qui comporte à une extrémité une entrée de gaz aspiré (16) et à son extrémité opposée une sortie de gaz aspiré (18) pouvant être reliée à un dispositif d'aspiration (20), un conduit de gaz de mesure (14) qui dérive du conduit de gaz aspiré (12) et qui comporte à une extrémité une entrée de gaz de mesure (22) formant la dérivation (26) et à son extrémité opposée une sortie de gaz de mesure (24) pouvant être reliée à un détecteur de gaz,
**caractérisée en ce que**
l'entrée de gaz de mesure (22) comporte un filtre à particules de gaz de mesure (28) disposée de sorte que le flux de gaz aspiré, qui est guidé à travers le conduit de gaz aspiré (12) en direction de la sortie de gaz aspiré (18), soit guidé le long de la surface du filtre à particules de gaz de mesure (28).

2. Sonde renifleuse (10) selon la revendication 1, **caractérisée en ce que** le filtre à particules de gaz de mesure (28) forme dans la région de la dérivation (26) la paroi intérieure tubulaire du conduit de gaz aspiré (12).

3. Sonde renifleuse (10) selon l'une des revendications précédentes, **caractérisée en ce que** le filtre à particules de gaz de mesure (28) est cylindrique.

4. Sonde renifleuse (10) selon la revendication 3, **caractérisée en ce qu'**un espace annulaire (38) est ménagé radialement à l'extérieur du filtre à particules de gaz de mesure (28).

5. Sonde renifleuse (10) selon l'une des revendications précédentes, **caractérisée en ce que** le flux de gaz aspiré est guidé dans la direction axiale à travers le conduit de gaz aspiré (12) et le filtre à particules de gaz de mesure (28) est au moins partiellement traversé radialement de l'intérieur vers l'extérieur.

6. Sonde renifleuse (10) selon l'une des revendications précédentes, **caractérisée en ce que** le flux de gaz aspiré, située en amont de la dérivation (26) par référence au sens de l'écoulement, est compris entre environ 2000 sccm et 4000 sccm et est de préférence environ 3000 sccm.

7. Sonde renifleuse (10) selon l'une des revendications précédentes, **caractérisée en ce que** le flux de gaz de mesure est compris entre environ 200 sccm et 400 sccm et est de préférence d'environ 300 sccm.

8. Sonde renifleuse (10) selon l'une des revendications précédentes, **caractérisée en ce que** la vitesse volumique du flux de gaz de mesure est comprise entre 0,01 fois et 0,5 fois, et est de préférence d'environ 0,1 fois, le flux de gaz aspiré.

9. Sonde renifleuse (10) selon l'une des revendications précédentes, **caractérisée en ce que** le filtre à particules de gaz de mesure (28) est formé de pores fins ayant une taille de pores de 1 µm maximum.

10. Sonde renifleuse (10) selon l'une des revendications précédentes, **caractérisée en ce que** l'entrée de gaz aspiré (16) comporte un filtre d'entrée (32).

11. Sonde renifleuse (10) selon la revendication 10, **caractérisée en ce que** le filtre d'entrée (32) a une taille de pores d'environ 10 µm.

12. Sonde renifleuse (10) selon l'une des revendications précédentes, **caractérisée en ce que** le conduit de gaz aspiré (12) comporte un filtre de sortie (34) situé en aval de la dérivation (26) par référence au sens de l'écoulement.

13. Sonde renifleuse (10) selon la revendication 12, **caractérisée en ce que** la taille des pores du filtre de sortie (34) est d'environ 10 µm.
